# EUROPEAN PATENT APPLICATION

(11) **EP 2 500 110 A1**
(43) Date of publication of application: **19.09.2012**
(21) Application number: 10829912.4
(22) Date of filing: 02.11.2010
(51) Int. Cl.: B05D 1/26, B05C 5/00

(54) **METHOD FOR FORMATION OF THREE-DIMENSIONAL SHAPED ARTICLE AND DEVICE FOR FORMATION THEREOF**

(30) Priority: 10.11.2009 JP 2009257008
(71) Applicant: Sony Corporation, Tokyo 108-0075 (JP)
(72) Inventor: TANAKA, Yasuhiro, Tokyo 108-0075 (JP); TSURUI, Ikuko, Tokyo 108-0075 (JP); MATSUI, Takeshi, Tokyo 108-0075 (JP)
(74) Representative: Mills, Julia
(86) International application number: PCT/JP2010/069868
(87) International publication number: WO 2011/058953

(57) **Abstract**

A solid shaped product is fabricated by using a liquid.

In a solid shaped-product fabrication method of discharging, to a target, a droplet from a nozzle of a liquid discharge unit for discharging a liquid, and fabricating a solid shaped product, the liquid contains at least water and a colorant that is dissolved or dispersed in the water, the droplet has a specific surface area of 0.2 m³/g or more and 0.5 m³/g or less on condition that the droplet is approximated by an ideal true sphere on the basis of a volume when the liquid is caused to fly as a single droplet, and the droplet having the specific surface area in such a range is continuously discharged to the target at 1 Hz or higher and 100 Hz or lower.

## Description

### Technical Field

The present invention relates to a fabrication method and a fabrication apparatus for fabricating a solid shaped product by using a liquid containing water and a colorant.

### Background Art

An ink jet recording method performs recording by forming an ink droplet and causing a part or the whole of the ink droplet to adhere to a recording material. Recently, the ink jet recording method has been used in a variety of fields and utilized in fabricating a structure having a thickness or a three-dimensional shaped object. Above all, a direct fabrication method of fabricating a three-dimensional shaped object by directly discharging a material used for fabrication can eliminate or reduce the extra material that does not contribute to the fabrication.

Examples of such a direct fabrication method are disclosed in Patent Literatures (PTLs) 1 to 4. PTL 1 proposes a method of omitting manufacturing of a wiring board by discharging a resist ink from an ink jet head to the surface of a conductor, e.g., a copper foil, which is affixed to the surface of an insulator board, and by drawing a resist pattern corresponding to an electrode wiring pattern.

PTL 2 proposes a technique of forming a stereoscopic image by using an ink that contains a foaming material and a thermoplastic resin.

PTL 3 and PTL 4 propose fabrication methods of ejecting a photo-curable resin by using an ink jet head.

The three-dimensional shaped objects described in PTLs 1 to 3 are not dissolved or re-dispersed in water regardless of whether the materials are soluble or insoluble in water. The reason is that, because the ink jet method is a technique for discharging a liquid, a curing process is required to obtain a shaped product in solid phase.

The curing processes utilized so far in the direct fabrication methods described in PTL 1 to PTL 3 are processes having nature not dissolved or dispersed in water. Therefore, the shaped products after the curing processes are not dissolved or dispersed in water. Thus, the shaped products cannot be returned to the original state, and they are irreversible in many cases.

Meanwhile, as one of general problems with the ink jet recording method, it is known that an ink deposit in the form of stalagmites/stalactites is generated in a waste ink absorber. In relation to a method of avoiding such a deposit, PTL 5 and PTL 6 propose improvements in a waste ink tank and a waste ink absorber. Regarding the causes of generating the ink deposit, PTL 5 states that the deposit is apt to be generated in the case using a coloring material and an ink composition, which tend to easily agglomerate. PTL 6 states that the deposit is generated when two types of inks are mixed with each other.

Further, in relation to one example of an ink jet recording technique using an electrostatic force, Non Patent Literature (NPL) 1 states that a column of a coloring material is grown at a position where ink droplets are landed, by continuously discharging the droplets to the same position at 1 kHz.

From the descriptions of PTL 5, PTL 6, and NPL 1, it can be said that a structure made of the coloring material and having a sufficient strength level from the viewpoint of practical strength properties when particular requirements are satisfied.

The structure made of the coloring material is obtained only on condition that a concentration of the coloring material is significantly increased in such a case where the ink is concentrated in the state of a waste liquid, or where the ink is concentrated at a nozzle tip before being discharged therefrom, as experienced in an ink jet head utilizing an electrostatic force.

In general, however, when the ink containing the coloring material with concentration at a so high level is used in the ink jet print head, the ink cannot be discharged because the viscosity of the ink is too high.

PTL 7 proposes a fabrication method of, after discharging an ink without concentrating the ink when discharged, causing the ink to gel on a base material, and stacking the gelled inks, thereby obtaining a columnar structure. The proposed fabrication method is a solid fabrication method that intends to avoid a discharge failure, which is attributable to an increase of viscosity, by adding a gelling agent to the ink without employing a curing method, such as UV curing.

The above-described PTLs and NPL propose techniques for forming three-dimensional solid structures by using the above-described ink jet methods, but they have respective problems explained below. Specifically, any of the solid structures obtained with the methods disclosed in PTLs 1 to 4 is insoluble in water. Further, because the methods disclosed in PTLs 1 to 4 include the step of curing the ink with heat or light, any of those methods has the problem that the fabrication takes a time and the size of an apparatus has to be increased.

Accordingly, the methods of fabricating the solid structures by using the ink jet methods known in the past have accompanied a difficulty in forming the solid structures by an ink jet method having stability that can be used in the commercial basis. In particular, it has been impossible to obtain a solid structure that is soluble in water.

NPL 1 states that a column of a coloring material can be formed by continuously landing the concentrated ink droplets. However, NPL 1 does not mention a control method for controlling discharge of the ink droplets at all, and a structure obtained with NPL 1 is just a deformed cylindrical column. Stated another way, the method described in NPL 1 merely discusses that the column of the coloring material can be formed perpendicularly to the base material.

In PTL 7, the gelling agent is added to droplets that are to be stacked one above another. The fabrication method described in PTL 7 requires the gelling agent to be added to the droplets such that, during the discharge or after the landing, the droplets are dried to cause gelling. Further, PTL 7 states that viscosity is given to the droplets by adding the gelling agent and resin. However, PTL 7 includes no descriptions regarding a specific surface area and a discharge frequency of the droplets. In addition, PTL 7 states that a discharged liquid composition is discharged in a columnar shape instead of being in a droplet state.

Moreover, regarding a method of discharging a droplet with a general ink jet technique, PTL 8 states that a specific surface area of the landed droplet is 0.6 or more. However, the unit of the specific surface is not mentioned. Even if it is supposed that the unit is m³/g, the droplet is very small. It is hence difficult to accurately align the landed position and to fabricate a solid structure.

### Citation List

### Patent Literature

PTL 1: Japanese Patent No. 3353928
PTL 2: Japanese Patent No. 3385854
PTL 3: Japanese Patent No. 2697136
PTL 4: Japanese Patent No. 2738017
PTL 5: Japanese Unexamined Patent Application Publication No. 2009-12457
PTL 6: Japanese Patent No. 4121705
PTL 7: Japanese Unexamined Patent Application Publication No. 2004-324755
PTL 8: Japanese Unexamined Patent Application Publication No. 2005-59301

Non Patent Literature
NPL 1: Journal of the Imaging Society of Japan, Vol. 40, No. 1 (2001), pp. 40-47, Murakami et al.: "Development of Ultra-High Precision Ink Jet Recording Technique Using Electrostatic Force"

### Summary of Invention

Accordingly, an object of the present invention is to provide a fabrication method for a solid shaped product, which can stably fabricate the solid shaped product on a target at a high rate by discharging a liquid in a state of droplets to the target, and a fabrication apparatus for use in the fabrication method.

With the view of achieving the above object, the solid shaped-product fabrication method according to the present invention resides in a solid shaped-product fabrication method of discharging, to a target, a droplet from a nozzle of a liquid discharge unit for discharging a liquid, and fabricating a solid shaped product, wherein the liquid contains water and a colorant that is dissolved or dispersed in the water, the droplet is continuously discharged to the target at 1 Hz or higher and 100 Hz or lower, the droplet having a specific surface area per mass of 0.2 m³/g or more and 0.5 m³/g or less on condition that the droplet is approximated by an ideal true sphere when the liquid is caused to fly as a single droplet, and the droplets are stacked one above another, thereby fabricating the solid shaped product extending in the same direction as that of a discharge axis of the droplet.

With the view of achieving the above object, the fabrication apparatus according to the present invention resides in an apparatus comprising a liquid discharge unit having a nozzle to discharge a droplet of a liquid, a fabrication stage on which a target is placed, the droplet being landed onto the target, and a Z-axis moving unit for moving the liquid discharge unit and/or the fabrication stage in a Z-axis direction, which is defined as the same direction as that of a discharge axis of the droplet, wherein the liquid discharge unit continuously discharges the droplet to the target at 1 Hz or higher and 100 Hz or lower, the droplet having a specific surface area per mass of 0.2 m³/g or more and 0.5 m³/g or less on condition that the droplet is approximated by an ideal true sphere when the liquid containing water and a colorant dissolved or dispersed in the water is caused to fly as a single droplet, and the Z-axis moving unit moves the liquid discharge unit and/or the fabrication stage in the Z-axis direction while the droplets are stacked one above another, thereby fabricating a solid shaped product extending in the Z-axis direction.

According to the present invention, at least water and a colorant dissolved or dispersed in the water are contained in a liquid. According to the present invention, the droplet is continuously discharged at 1 Hz or higher and 100 Hz or lower such that the droplet has a specific surface area per mass of 0.2 m³/g or more and 0.5 m³/g or less on condition that the droplet is approximated by an ideal true sphere when the liquid is caused to fly as a single droplet. The droplets are stacked one above another in the direction of the discharge axis of the liquid, whereby the solid shaped product can be fabricated.

### Brief Description of Drawings

Fig. 1 is a perspective view of a fabrication apparatus for use in a method of fabricating a solid shaped product, to which the present invention is applied.
Fig. 2(A) is a plan view of a liquid discharge head of a liquid discharge apparatus in the fabrication apparatus, and Fig. 2(B) is a sectional view taken along a line A-A in Fig. 2(A).
Fig. 3(A) is a schematic view illustrating a process of discharging a droplet and fabricating a solid shaped product, and Fig. 3(B) is a schematic view of the solid shaped product.
Fig. 4(A) is a schematic view of the solid shaped product after 0.5 sec from the start of the fabrication, Fig. 4(B) is a schematic view of the solid shaped product after 1 sec from the start of the fabrication, and Fig. 4(C) is a schematic view of the solid shaped product after 5 sec from the start of the fabrication.
Fig. 5(A) is a schematic view of a solid shaped product fabricated by using a droplet with a specific surface area of 0.2 m³/g, and Fig. 5(B) is a schematic view of a solid shaped product fabricated by using a droplet with a specific surface area of 0.5 m³/g.
Fig. 6(A) is a schematic view of a solid shaped product having a substantially cylindrical columnar shape and extending in the Z-axis direction, and Fig. 6(B) is a schematic view of a solid shaped product grown in an oblique direction.
Fig. 7(A) is a schematic view illustrating a state where columns each extending in the Z-axis direction are formed, Fig. 7(B) is a schematic view illustrating a state where one of the columns is grown in an oblique direction, Fig. 7(C) is a schematic view illustrating a state where adjacent columns are grown in oblique directions, Fig. 7(D) is a schematic view illustrating a state where the adjacent columns are bridged to each other, and Fig. 7(E) is a schematic view illustrating a state where all the columns are bridged with each other.

### Description of Embodiments

A manufacturing method for a solid shaped product and a fabrication apparatus for fabricating the solid shaped product, to which the present invention is applied, will be described in detail below with reference to the drawings. The description is made in the following order.
1. Fabrication apparatus for fabricating solid shaped product
   (1) Liquid discharge unit
   (2) Fabrication stage
   (3) Z-axis moving unit
   (4) X-axis moving unit
   (5) Y-axis moving unit
2. Fabrication method for solid shaped product
   (1) Liquid
   (2) Fabrication method

### 1. Fabrication apparatus for fabricating solid shaped product

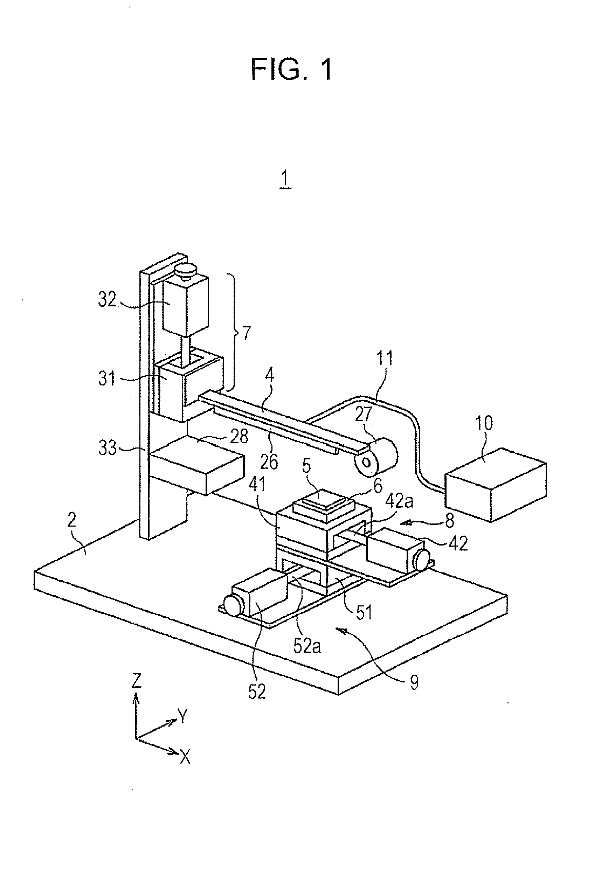

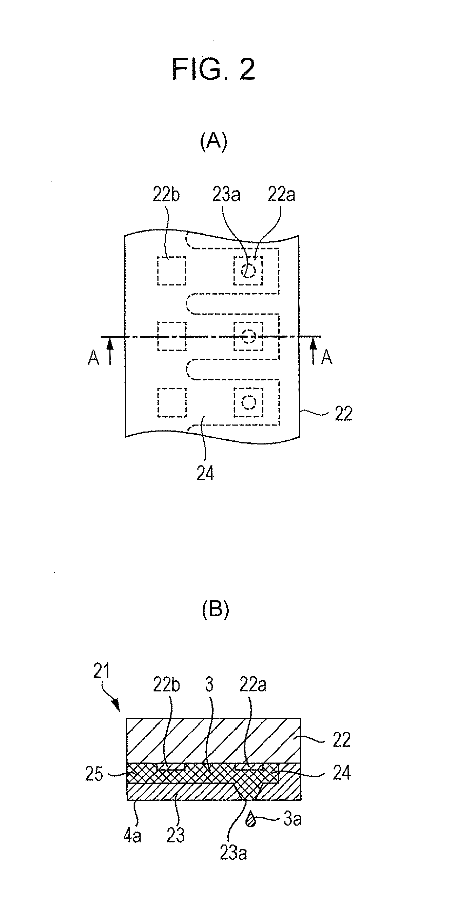

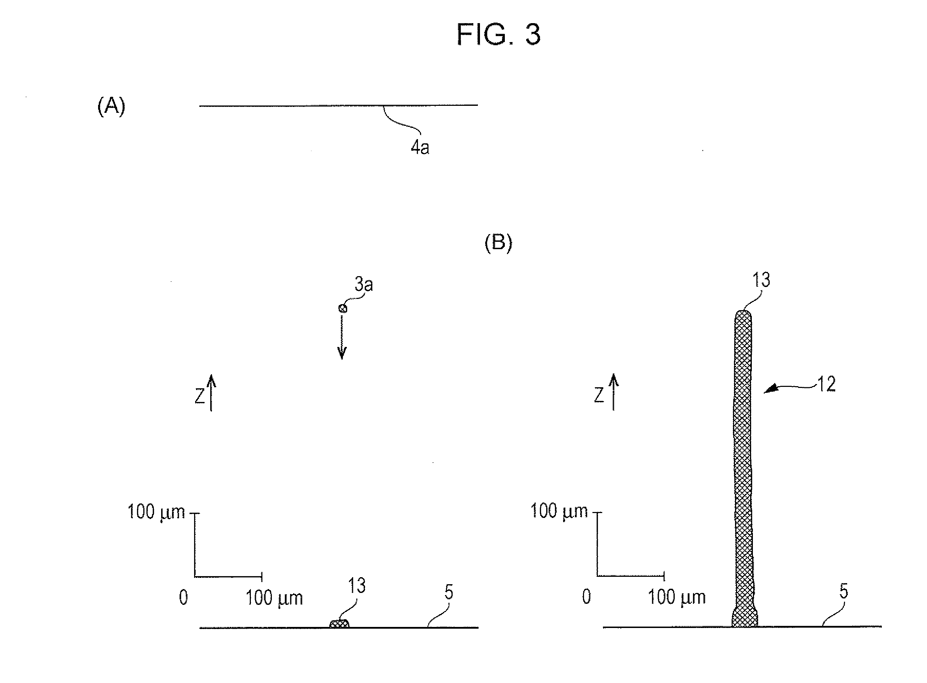

A fabrication apparatus 1 is illustrated in Figs. 1 and 2. The fabrication apparatus 1 includes a support table 2, a liquid discharge unit 4 for discharging a liquid 3, and a fabrication stage 6 disposed to face a surface 4a of the liquid discharge unit 4 from which the liquid 3 is discharged, the fabrication stage 6 holding thereon a target 5 onto which a droplet 3a discharged from the liquid discharge unit 4 is landed. Further, the fabrication apparatus 1 includes a Z-axis moving unit 7 for moving the liquid discharge unit 4 in a direction of a discharge axis of the droplet 3a, the direction of the discharge axis being defined as a direction in which the droplet 3a is discharged from the liquid discharge unit 4 toward the target 5, i.e., in a Z-axis direction here. Still further, the fabrication apparatus 1 includes an X-axis moving unit 8 for moving the fabrication stage 6 in an X-axis direction in a plane that is substantially perpendicular to the Z-axis direction, and a Y-axis moving unit 9 for moving the fabrication stage 6 in a Y-axis direction in that plane. Moreover, the fabrication apparatus 1 includes a liquid tank 10 containing the liquid 3, in an optionally attachable manner, such that the liquid 3 can be supplied to the liquid discharge head 4 from the liquid tank 10 through a liquid supply member 11. In the fabrication apparatus 1 thus constructed, the liquid discharge unit 4 can discharge the droplet 3a and fabricate a columnar solid shaped product 12, illustrated in Fig. 3, which extends in the direction of the discharge axis of the droplet 3a, i.e., in the Z-axis direction.

### (1) Liquid discharge unit

The liquid discharge unit 4 is a liquid discharge head 4 for discharging the liquid 3, described later, in a state of the droplet 3a to the target 5, such as plain paper, glossy paper, or a substrate. As illustrated in Fig. 1, the liquid discharge head 4 is formed in a substantially linear elongate shape and is detachably attached at one end along its longer side to the Z-axis moving unit 7 such that the liquid discharge head 4 is disposed substantially parallel to the fabrication stage 6.

In the liquid discharge head 4, the liquid 3 is pressed with a pressure generation element, thereby causing the liquid 3 to be discharged. In more detail, as illustrated in Fig. 2, the liquid discharge head 4 includes a head chip 21 for discharging the liquid 3 supplied from the liquid tank 10. The head chip 21 includes a circuit board 22 including, as the pressure generation element, a heater 22a in the form of a heating resistor, for example, and a warming heater 22b for preliminarily heating the liquid 3, and a nozzle sheet 23 including nozzles 23a formed therein as discharge ports through which the liquid 3 is discharged. The heater 22a is disposed in a liquid pressurization chamber 24 that is filled with the liquid 3 supplied from the liquid tank 10. The liquid pressurization chamber 24 has an upper surface defined by the circuit board 22 including the heater 22a, and has a lower surface and three peripheral side surfaces, which are defined by the nozzle sheet 23 and a wall portion formed integrally with the nozzle sheet 23. The remaining one side surface of the liquid pressurization chamber 24 is opened to a flow passage 25 through which the liquid 3 is supplied to the inside of the liquid pressurization chamber 24.

The heater 22a is disposed at a position opposed to the nozzle 23a and is in the form of a heating resistor of 20 µm square, for example. The heater 22a generates a bubble by heating the liquid 3 in the surroundings. With the bubble expanding and pressing the liquid 3, the displaced liquid 3 is discharged in the state of the droplet 3a from the nozzle 23a.

The warming heater 22b is disposed in the flow passage 25. The warming heater 22b optionally controls the temperature of the discharged liquid 3. For example, the warming heater 22b warms up the liquid 3 before the heating by the heater 22a so that, after the liquid 3 has been discharged from the nozzle 23a, the liquid 3 is more apt to be properly dried during flying and after being landed onto the target 5.

The nozzle sheet 23 is made of resin. The nozzle sheet 23 includes a plurality of nozzles 23a, which are formed side by side therein in a circular shape having a diameter of about 17 µm, for example, and which are tapered to be gradually narrowed toward the discharge surface 4a. A plurality of nozzles 23a having different nozzle diameters, or nozzles 23a having other shapes, such as an elliptic shape, may be formed in the nozzle sheet 23.

Further, the liquid discharge head 4 includes a temperature and humidity sensor 26 for measuring the temperature and the humidity in a space between the nozzle 23a and the target 5.

Still further, the liquid discharge head 4 includes an observation camera 27 for observing the shaped product that has been fabricated on the target 5.

The liquid discharge head 4 constructed as described above controls a control circuit on the circuit board 22 in the head chip 21 for discharging the liquid 3 in accordance with a discharge control signal, which is based on data of the solid shaped product 12 and which is input from a controller in an electric control device. Further, the liquid discharge head 4 supplies a pulse current to the selected heater 22a, thereby causing heating with the heater 22a. In the liquid discharge head 4, a bubble is generated upon the heating with the heater 22a. The generated bubble presses the liquid 3 in the surroundings, thus causing the liquid 3 to be discharged in the state of the droplet 3a from the nozzle 23a, as illustrated in Fig. 2(B). The liquid discharge head 4 is movable in the X-, Y- and z-axis directions respectively by the X-axis moving unit 8, the Y-axis moving unit 9, and the Z-axis moving unit 7, illustrated in Fig. 1, which will be described below.

### (2) Fabrication stage

The fabrication stage 6 holds thereon the target 5, such as plain paper, glossy paper, or a substrate, to which the droplet 3a of the liquid 3 is discharged from the liquid discharge unit 4, and the fabrication stage 6 supports the target 5 substantially parallel to the discharge surface 4a of the liquid discharge head 4. The fabrication stage 6 is movable in the X-, Y- and Z-axis directions respectively by the X-axis moving unit 8, the Y-axis moving unit 9, and the Z-axis moving unit 7, which will be described below.

### (3) Z-axis moving unit

In Fig. 1, the Z-axis moving unit 7 serves as a means for moving the liquid discharge head 4 in a direction toward or away from the fabrication stage 6. The Z-axis moving unit 7 moves the liquid discharge head 4 along a Z-axis guide member 33. The Z-axis moving unit 7 is constituted by a Z-axis stage 31 that is mounted to the Z-axis guide member 33 to be movable in the Z-axis direction, i.e., in the same direction as that of a discharge axis along which the liquid 3 is discharged, and by a Z-axis motor 32 for moving the Z-axis stage 31 in the Z-axis direction along the Z-axis guide member 33. In the Z-axis moving unit 7, for example, a driving force is transmitted to the Z-axis stage 31 through a rotating shaft of the Z-axis motor 32, whereby the Z-axis stage 31 is moved in the Z-axis direction. Thus, the Z-axis moving unit 7 moves the liquid discharge head 4 in the Z-axis direction by moving the Z-axis stage 31 in the Z-axis direction.

As one modified construction, the Z-axis moving unit 7 may be disposed on the side including the fabrication stage 6, and the fabrication stage 6 may be moved in the Z-axis direction such that the fabrication stage 6 is moved toward or away from the liquid discharge head 4. As another modified construction, the Z-axis moving unit 7 may be disposed on each of the liquid discharge head 4 and the fabrication stage 6, and the liquid discharge head 4 and the fabrication stage 6 may be both moved in the Z-axis direction such that the liquid discharge head 4 and the fabrication stage 6 are moved closer to or away from each other.

### (4) X-axis moving unit

In Fig. 1, the X-axis moving unit 8 moves the fabrication stage 6 in the X-axis direction. The X-axis moving unit 8 is disposed on the Y-axis moving unit 9. The X-axis moving unit 8 is constituted by an X-axis stage 41 on which the fabrication stage 6 is disposed, and by an X-axis motor 42 for moving the X-axis stage 41 in the X-axis direction. In the X-axis moving unit 8, a driving force is transmitted to the X-axis stage 41 through a rotating shaft 42a of the X-axis motor 42, whereby the X-axis stage 41 is moved in the X-axis direction. Thus, the X-axis moving unit 8 moves the fabrication stage 6 in the X-axis direction by moving the X-axis stage 41 in the X-axis direction.

As a modified construction, the X-axis moving unit 8 may be disposed on the liquid discharge head 4 or on each of the liquid discharge head 4 and the fabrication stage 6 such that the liquid discharge head 4 or both the liquid discharge head 4 and the fabrication stage 6 may be moved in the X-axis direction.

### (5) Y-axis moving unit

In Fig. 1, the Y-axis moving unit 9 is disposed between the support table 2 and the X-axis stage 41. The Y-axis moving unit 9 moves the fabrication stage 6 in the Y-axis direction. The Y-axis moving unit 9 is constituted by a Y-axis stage 51 on which the fabrication stage 6 and the X-axis stage 41 are disposed, and by a Y-axis motor 52 for moving the Y-axis stage 51 in the Y-axis direction. In the Y-axis moving unit 9, a driving force is transmitted to the Y-axis stage 51 through a rotating shaft 52a of the Y-axis motor 52, whereby the Y-axis stage 51 is moved in the Y-axis direction. Thus, the Y-axis moving unit 9 moves the fabrication stage 6 in the Y-axis direction by moving the Y-axis stage 51 in the Y-axis direction.

As a modified construction, the Y-axis moving unit 9 may be disposed on the liquid discharge head 4 or on each of the liquid discharge head 4 and the fabrication stage 6 such that the liquid discharge head 4 or both the liquid discharge head 4 and the fabrication stage 6 may be moved in the Y-axis direction.

Furthermore, the fabrication apparatus 1 may include a control unit 28 for controlling an environment including temperature and humidity, under which stable fabrication can be performed on the target 5, and for keeping constant the environment. The control unit 28 is constituted as an air conditioner, incorporating a blower, a heat exchanger, a humidifier, an air filter, etc., to keep constant the environment in the space between the nozzle 23a and the target 5 in accordance with the results of measuring the temperature and the humidity by the temperature and humidity sensor 26.

### 2. Fabrication method

### (1) Liquid

The liquid 3 contains at least water and a colorant dissolved or dispersed in the water. The colorant selected here is the type that is used in water-soluble ink and that is apt to agglomerate. One practical example of the colorant is a yellow dye Y1189 commercialized from Ilford Imaging Switzerland GmbH. It is to be noted that the colorant is not limited to the yellow dye Y1189. Thus, the present invention can also be practiced by using other dyes, and other suitable colorants can be optionally selected as required. A water-based liquid 3 containing a pigment dispersed therein may also be used. Because the water-based liquid 3 containing a pigment dispersed therein is not easily dispersed in water again, the solid shaped product 12 fabricated by using that type of liquid 3 is insoluble in water.

In addition, the liquid 3 may contain a moisturizing agent to prevent the liquid 3 from being dried inside the nozzle 23a of the liquid discharge head 4. The content of the moisturizing agent is set to be not higher than the concentration of the colorant. The humidifying agent is, e.g., trimethylol propane. From the viewpoint of avoiding a reduction in strength of the solid shaped product, a humidifying agent that is in solid phase under an ordinary environment at normal temperature and normal pressure is preferably selected so as to obtain a structure having higher strength.

It is to be noted that the liquid 3 is not limited to one containing the water and the colorant. Instead of the colorant, a water-soluble salt can also be used as long as it has appropriately higher molecular weight, e.g., molecular weight in the range of several hundreds to several thousands, and it exhibits viscosity after drying of a solvent.

### (2) Fabrication method

In the fabrication apparatus 1 described above, the target 5, such as plain paper or a substrate, is placed on the fabrication stage 6 and is positioned such that the target 5 is opposed to the nozzle 23a of the liquid discharge head 4. In the fabrication apparatus 1, the liquid 3 is supplied from the liquid tank 10 to the liquid pressurization chamber 24 in the liquid discharge head 4 through the flow passage 25. Further, in the fabrication apparatus 1, the liquid 3 supplied to the liquid pressurization chamber 24 is pressed under heating with the heater 22a, thus causing the droplet 3a to be discharged to the target 5 from the nozzle 23a. When the liquid 3 is discharged, the droplet 3a has a specific surface area per mass of 0.2 m³/g or more and 0.5 m³/g or less on condition that the droplet 3a is approximated by an ideal true sphere when the liquid 3 is caused to fly as a single droplet 3a. Moreover, the droplet 3a having the specific surface area in such a range is continuously discharged to, for example, the same position on the target 5 at 1 Hz or higher and 100 Hz or lower. The fabrication apparatus 1 can fabricate the solid shaped product 12 in a substantially cylindrical columnar shape, illustrated in Fig. 3, by controlling the specific surface area of the droplet 3a and the discharge frequency of the droplet 3a such that drying of the droplet 3a during the flying and after being landed onto the target 5 and agglomeration of the colorant are properly controlled.

Here, when the liquid 3 is caused to fly as the single droplet 3a, the specific surface area per mass of the droplet 3a, which is approximated by the ideal true sphere, can be obtained as follows. First, the volume of one droplet is determined. The size of a main droplet can be measured by taking an image of the discharged droplet 3a in a stroboscopic manner. As another method, when the number of satellites is sufficiently small, a liquid amount per droplet can be approximately obtained by determining an amount of the liquid 3 used to discharge a certain number of droplets. From the volume of the droplet 3a (single droplet) thus obtained, a radius r (µm) of the droplet 3a is determined on an assumption that the droplet has an ideal spherical shape. From the determined radius r (µm), a surface area of the droplet approximated by the ideal sphere is calculated as 4πr², and a volume thereof is calculated as (4/3)πr³. Given that the density of the liquid 3 is p (g/cm³) (ρ is nearly 1), the specific surface area (Sm) can be obtained as Sm = 3/(r·ρ) (m³/g).

When the specific surface area thus obtained is smaller than 0.2 m³/g, the liquid amount per droplet is too much and such a condition is not suitable for the solid fabrication, which is performed by stacking the droplets, for the reason that the liquid 3 discharged from the nozzle 23a is landed onto the target 5 on the fabrication stage 6 before the liquid 3 is satisfactorily dried. Conversely, when the specific surface area is larger than 0.5 m³/g, the liquid amount per droplet is too small and such a condition is also not suitable for the solid fabrication, which is performed by stacking the droplets, for the reason that, although the droplet is sufficiently dried, the droplet is more easily affected by air resistance and a difficulty occurs in accurately landing the droplet onto the proper position.

In addition, it is known that the droplet 3a flies while changing its shape until landing from just after being discharged, and that the droplet shape cannot be specified. Basically, however, because the droplet is changed from a spherical shape to a fusiform shape or a tear-like shape while continuing vibration, the droplet can be sufficiently controlled by treating it in terms of the specific surface area of the ideal spherical shape when influences on drying and agglomeration of the droplet under certain condition are considered. In the present invention, a discussion is made in terms of the specific surface area per mass of the droplet 3a that is approximated by the ideal sphere when the liquid 3 is caused to fly as the single droplet 3a.

Further, in the fabrication apparatus 1, the droplet 3a is discharged at the discharge frequency of 1 Hz or higher and 100 Hz or lower. By discharging the droplet 3a in number 1 to 100 per second to be landed one above another, a solvent evaporates from the surface of each droplet 3a in a short time of several tens µsec to several hundreds µsec until the droplet 3a is landed onto the target 5, and agglomeration of the colorant starts at the same time. When the droplet 3a is landed onto the target 5 in a state that the surface of the droplet 3a is slightly agglomerated, solidification of the droplet 3a is further progressed on the target 5 and the landed droplet 3a takes a semispherical shape on the target 5. Moreover, by setting an interval of 10 msec to 1000 msec until the next droplet 3a is overlaid, the drying and the agglomeration of the droplet 3a are further progressed on the target 5 to such an extent that a larger dot is not generated even when the next droplet 3a is overlaid on the preceding droplet 3a. Thus, the droplets 3a are successively stacked one above another in the direction of the discharge axis of each droplet 3a (i.e., in the Z-axis direction). The discharge frequency of the droplet 3a is determined depending on the environment, e.g., the temperature and the humidity, in the surroundings of the fabrication apparatus 1 such that each droplet 3a is dried during the flying and after being landed onto the target 5, whereby the droplets 3a can be stacked one above another. For example, in the environment where the droplet 3a is less apt to dry, the discharge interval between the droplets 3a is increased. In the environment where the droplet 3a is more apt to dry, the discharge interval between the droplets 3a is reduced.

With the fabrication method described above, as illustrated in Fig. 3(A), the droplets 3a are landed in number 1 to 100 per second at a growth point 13 one above another. Thus, according to the fabrication method, the solid shaped product 12 in a substantially cylindrical columnar shape is formed by the colorant that is agglomerated at a rate of several µm to several tens µm per second, as illustrated in Fig. 3(B), as if stalagmites or stalactites are grown. Incidentally, the solid shaped product 12 in the substantially cylindrical columnar shape, illustrated in Fig. 3(B), has a diameter of 24 µm and is fabricated on condition that the specific surface area of the droplet 3a is 0.3 m³/g or more and the discharge frequency of the droplets 3a is 10 Hz. It is to be noted that the shape of the solid shaped product 12 is not limited to the substantially cylindrical column, and it can be changed depending on the shape of the nozzle 23a.

In the fabrication apparatus 1, after a first droplet 3a has been discharged and landed onto the target 5, the landed first droplet 3a becomes a growth point 13 and a second droplet 3a is stacked on that growth point 13. Further, the landed second droplet 3a becomes a growth point 13 and a third droplet 3a is stacked on that growth point 13. Similarly, fourth and subsequent droplets 3a are each stacked on the droplet 3a, which has been landed just before.

When the first droplet is discharged, the position of the liquid discharge head 4 is adjusted by moving the liquid discharge head 4 in the Z-axis direction, i.e., in the direction toward or away from the target 5, with the Z-axis moving unit 7 such that the distance between the nozzle 23a (discharge surface 4a) of the liquid discharge head 4 and the target 5 is set to a predetermined distance. Then, when the second and subsequent droplets are each discharged, the distance between the droplet 3a (growth point 13), which is located at an upper most position among the droplets 3a having been landed onto the target 5, and the nozzle 23a (discharge surface 4a) of the liquid discharge head 4 is adjusted. The adjustment is performed by raising the liquid discharge head 4 in the Z-axis direction, i.e., in the direction away from the target 5, such that the distance between the nozzle 23a (discharge surface 4a) of the liquid discharge head 4 and the target 5 becomes substantially the same as the predetermined distance, which has been adjusted when discharging the first droplet. Further, the humidity and the temperature in the space between the liquid discharge head 4 and the target 5 are measured by the temperature and humidity sensor 26 and are adjusted such that the humidity and the temperature in the space between the liquid discharge head 4 and the target 5 are kept substantially constant. By keeping the humidity and the temperature in the space between the liquid discharge head 4 and the target 5 substantially constant, the discharged droplets 3a can be each dried at a constant degree and the solid shaped product 12 can be stably fabricated.

In the fabrication apparatus 1, by discharging the liquid 3 under the above-described conditions, the discharged droplet 3a is dried during the flying and after being landed onto the target 5, while the colorant is agglomerated and solidified appropriately, whereby the landed droplet 3a is held in a semispherical shape without spreading in the planar direction of the target 5. In the fabrication apparatus 1, therefore, when the droplets 3a are discharged to the same position, the solid shaped product 12 having the substantially cylindrical columnar shape and extending in the direction of the discharge axis of the droplet 3a (i.e., in the Z-axis direction) can be fabricated with the liquid 3, as illustrated in Fig. 3(B). Here, the discharge axis of the droplet 3a represents an axis substantially parallel to the direction in which the droplet 3a is discharged from the nozzle 23a of the liquid discharge head 4 to the target 5.

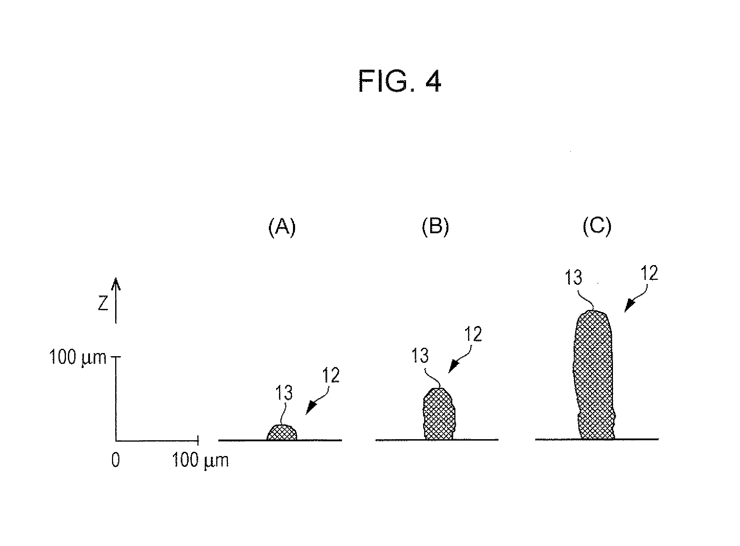

For example, when the droplets 3a are discharged to the same position at the discharge frequency of 10 Hz with the discharged droplets 3a each having the specific surface area of 0.3 m³/g, the droplets 3a are stacked one above another and the solid shaped product 12 having the substantially cylindrical columnar shape with a diameter of 24 µm and extending in the same direction as that of the discharge axis of the liquid 3 (i.e., in the Z-axis direction) is fabricated, as illustrated in Fig. 4. Fig. 4(A) illustrates the solid shaped product 12 after 0.5 sec from the start of the fabrication. In this state, the droplets 3a are stacked one above another on the target 5 and the droplets 3a are landed in a semispherical shape. Fig. 4(B) illustrates the solid shaped product 12 after 1 sec from the start of the fabrication. This solid shaped product 12 is fabricated through a process that the droplets 3a are stacked one above another in the same direction as that of the discharge axis (i.e., in the Z-axis direction), whereby the growth point 13 of the solid shaped product 12 having the substantially cylindrical columnar shape is grown in the same direction as that of the discharge axis (i.e., in the Z-axis direction). When the discharge of the droplets 3a is further continued, the solid shaped product 12 is further grown in the same direction as that of the discharge axis (i.e., in the Z-axis direction) and, after 5 sec from the start of the fabrication, the solid shaped product 12 illustrated in Fig. 4(C) can be fabricated.

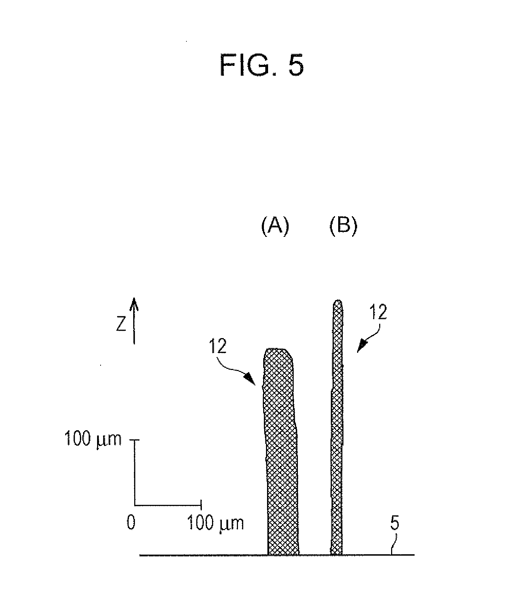

Also, when the specific surface area of the discharged droplet 3a is 0.2 m³/g and the discharge frequency is 1 Hz, the solid shaped product 12 having a diameter of 40 µm, illustrated in Fig. 5(A), can be obtained. When the specific surface area of the discharged droplet 3a is 0.5 m³/g and the discharge frequency is 10 Hz, the solid shaped product 12 having a diameter of 14 µm, illustrated in Fig. 5(B), can be obtained.

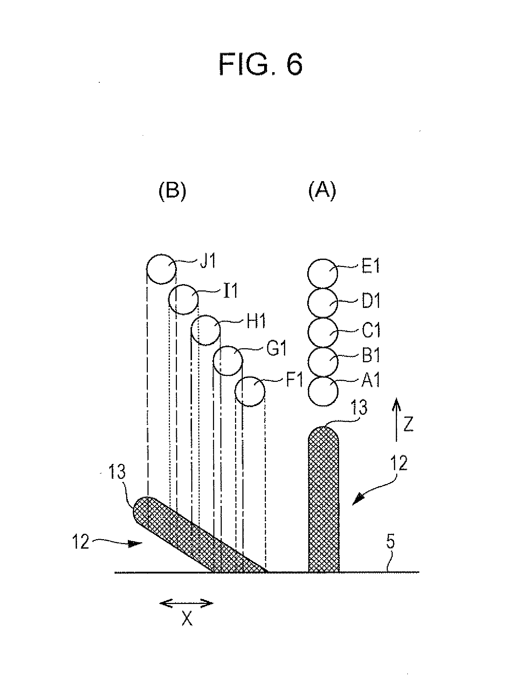

With the fabrication method described above, it is possible to fabricate not only the solid shaped product 12 having the cylindrical columnar shape in the direction of the discharge axis (i.e., in the Z-axis direction), but also the solid shaped product 12 extending obliquely at an angle of not greater than 90 degrees as illustrated in Fig. 6 or just laterally with respect to the direction of the discharge axis of the droplet 3a (i.e., to the Z-axis direction). The solid shaped product 12 extending obliquely at an angle of not greater than 90 degrees or just laterally can be fabricated by stacking the droplets 3a such that, when discharging the second and subsequent droplets 3a, each droplet 3a is landed not at the same position as the landed position of the just previously discharged droplet 3a, but at a position shifted from the position, at which the just preceding droplet 3a has been landed onto the target 5, by a distance not greater than the diameter of the previously landed droplet 3a.

Fig. 6(A) illustrates the solid shaped product 12 having the substantially cylindrical columnar shape and extending in the direction of the discharge axis (i.e., in the Z-axis direction). In Fig. 6(A), a first droplet 3a (A1) is discharged and landed onto the target 5. Then, a second droplet 3a (B1) is discharged and stacked on the droplet 3a (A1) which has been landed onto the target 5. Similarly, a third droplet 3a (C1) is stacked on the droplet 3a (B1), a droplet 3a (D1) is stacked on the droplet 3a (C1), and a droplet 3a (E1) is stacked onto the droplet 3a (D1). Thus, by causing the droplets 3a from (A1) to (E1) to be landed substantially at the same position, the solid shaped product 12 is formed through a process that a top end of the solid shaped product 12 having the substantially cylindrical columnar shape becomes the growth point 13 and is grown in the Z-axis direction. Here, when the droplets 3a (A1) to (E1) are discharged, the liquid discharge head 4 is moved in the Z-axis direction such that the distance between the growth point 13 of the solid shaped product 12 and the nozzle 23a (discharge surface 4a) of the liquid discharge head 4 is held constant.

Fig. 6(B) illustrates the solid shaped product 12 that is grown obliquely at an angle of not greater than 90 degrees with respect to the direction of the discharge axis (i.e., to the Z-axis direction) by shifting the landed position of each droplet 3a in the X-axis direction within a distance not greater than the diameter of the droplet 3a that has been just previously landed onto the target 5. Shifting the landed position of each droplet 3a within a distance not greater than the diameter of the droplet 3a just previously landed onto the target 5 is equivalent to, as described later, shifting the landed position of each droplet 3a within a distance not greater than the diameter of the top end of the solid shaped product 12 formed by the previously discharged droplet(s) 3a and having the cylindrical columnar shape in the direction of the discharge axis (i.e., in the Z-axis direction), i.e., than the diameter of the growth point 13 where the droplet 3a is landed for growth of the solid shaped product 12.

In Fig. 6(B), a first droplet 3a (F1) is discharged and landed onto the target 5. Then, a second droplet 3a (G1) is discharged such that the second droplet 3a (G1) is stacked on the droplet 3a (F1) while the landed position of the droplet 3a (G1) is shifted within a distance not greater than the diameter of the droplet 3a (F1), which has been landed onto the target 5. In other words, the droplet 3a (F1) having been landed onto the target 5 becomes the growth point 13 of the solid shaped product 12, and the droplet 3a (G1) is landed onto the growth point 13 while the landed position thereof is shifted within a distance not greater than the diameter of the growth point 13. Similarly, a third droplet 3a (H1) is discharged and landed onto the growth point 13 that has been formed by the landing of the droplet 3a (G1), while the landed position of the droplet 3a (H1) is shifted within a distance not greater than the diameter of the relevant growth point 13. Fourth and subsequent droplets 3a (I1) (J1) are also each stacked on the growth point 13 while the landed position thereof is shifted within a distance not greater than the diameter of the relevant growth point 13. Here, when the droplets 3a (F1) to (J1) are discharged, the liquid discharge head 4 is moved in the Z-axis direction such that the distance between the growth point 13 and the nozzle 23a (discharge surface 4a) of the liquid discharge head 4 is held constant.

Additionally, Fig. 6(B) illustrates the state where respective loci of the droplets 3a (F1) to (J1) prior to the landing are overlapped with each other. By successively discharging the droplets 3a (F1) to (J1) in such a gradually shifted way, the droplets 3a (F1) to (J1) are stacked one above another at the growth point 13, as described above, after being landed. Further, it is at least required in the present invention that the landed droplets 3a are stacked one above another at the growth point 13.

Here, when the droplet 3a is landed onto the target 5 or onto the droplet 3a having been previously discharged, the diameter of the landed droplet 3a becomes slightly larger than that of the droplet 3a before the landing depending on the environment and the discharge frequency. In this respect, the inventors have confirmed the following point, When the droplet 3a having the specific surface area of 0.2 m³/g is discharged at the discharge frequency of 10 Hz, the diameter of the droplet 3a is 30 µm, but the droplet 3a after the landing has a diameter of 40 µm. When the droplet 3a having the specific surface area of 0.3 m³/g is discharged at the discharge frequency of 10 Hz, the diameter of the droplet 3a is 20 µm, but the droplet 3a after the landing has a diameter of 24 µm. When the droplet 3a having the specific surface area of 0.5 m³/g is discharged at the discharge frequency of 10 Hz, the diameter of the droplet 3a is 12 µm, but the droplet 3a after the landing has a diameter of 14 µm.

In the fabrication apparatus 1, the landed position of the droplet 3a can be shifted by moving the fabrication stage 6, on which the target 5 is placed, in the X-axis direction by the X-axis moving unit 8 or in the Y-axis direction by the Y-axis moving unit 9, i.e., in a direction opposite to the direction in which the solid shaped product 12 is to be grown, within a distance not greater than the diameter of the growth point 13 of the solid shaped product 12.

Thus, in the fabrication apparatus 1, by moving the fabrication stage 6 in the X-axis direction or in the Y-axis direction, the landed position of the liquid 3 is shifted and hence the solid shaped product 12 is obliquely grown at an angle of not greater than 90 degrees with respect to the direction of the discharge axis (i.e., to the Z-axis direction). As a result, the solid shaped product 12 illustrated in Fig. 6(B) can be fabricated. The fabrication apparatus 1 described above can also fabricate a columnar solid shaped product 12 extending in a direction perpendicular to the direction of the discharge axis (i.e., to the Z-axis direction), namely extending just laterally. It is to be noted that, in the fabrication apparatus 1, the solid shaped product 12 illustrated in Fig. 6(B) may be fabricated by moving the liquid discharge head 4 in the direction in which the solid shaped product 12 is to be grown.

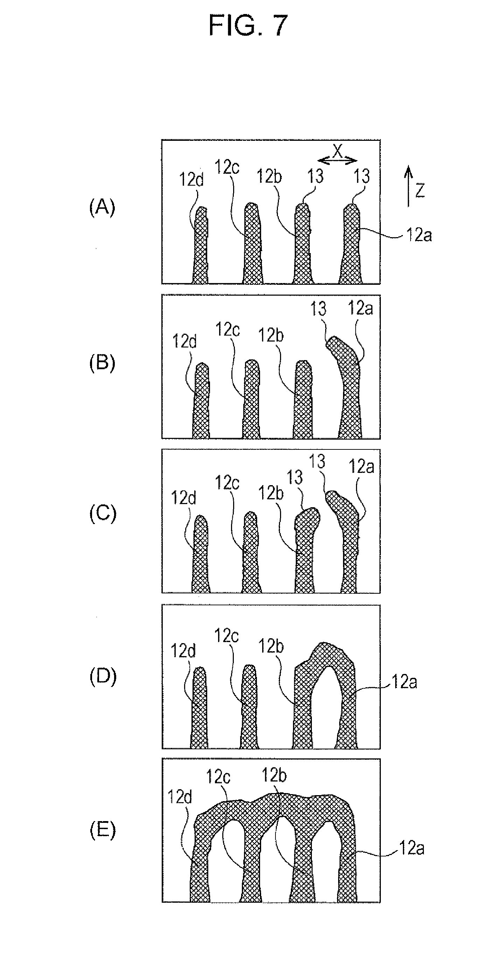

As illustrated in Fig. 7, for example, a bridged structure can be fabricated in which adjacent solid shaped products each having a cylindrical columnar shape and extending in the direction of the discharge axis (i.e., in the Z-axis direction) are connected to each other. In order to obtain such a bridged structure, solid shaped products 12 each having a cylindrical columnar shape and extending in the direction of the discharge axis (i.e., in the Z-axis direction) are first fabricated as illustrated in Fig. 7(A). It is to be noted that, in the following description of Fig. 7, the solid shaped products each having the cylindrical columnar shape and extending in the direction of the discharge axis (i.e., in the Z-axis direction) are called columns 12a to 12d. Next, as illustrated in Fig. 7(B), one column 12a is grown obliquely at an angle of not greater than 90 degrees in a direction toward another column 12b that is adjacent to one column 12a. In order to grow the column 12a in such a way, when discharging the droplet 3a to a growth point 13 of the column 12a, the fabrication stage 6 is moved in a direction opposite to the direction in which the column 12a is to be grown, e.g., in the X-axis direction, within a distance not greater than the diameter of the growth point 13. As a result, the column 12a is grown obliquely at the angle of not greater than 90 degrees in the direction toward the other column 12b that is adjacent to the column 12a. Similarly, the droplet 3a is discharged to a growth point 13 of the other column 12b that is adjacent to the column 12a, while the fabrication stage 6 is moved in a direction toward the column 12c from the column 12b. With that operation, as illustrated in Fig. 7(C), the column 12b is grown obliquely at an angle of not greater than 90 degrees in a direction toward the column 12a. Then, by further growing one or both of the columns 12a and 12b, as illustrated in Fig. 7(D), the adjacent columns 12a and 12b are connected to each other, whereby the bridged structure is formed. Similarly, as illustrated in Fig. 7(E), a bridged structure connecting the plural columns 12a to 12d to each other can be fabricated by further forming a structure bridged to the other adjacent columns 12c and 12d.

The bridged structure, illustrated in Fig. 7, is fabricated by discharging the droplet 3a on condition that the specific surface area of the discharged droplet 3a is 0.5 m³/g and the discharge frequency is 10 Hz. The columns 12a to 12d extending in the direction of the discharge axis (i.e., in the Z-axis direction) have a cylindrical columnar shape and a diameter of 24 µm, and the interval between adjacent two of the columns 12a to 12d is 100 µm. It is to be noted that, while the fabrication stage 6 is moved in the X-axis direction when fabricating the bridged structure illustrated in Fig. 7, the columns 12a to 12d may be grown obliquely at an angle of not greater than 90 degrees by moving the fabrication stage 6 in the Y-axis direction by the Y-axis moving unit 9 depending on the positions of the columns 12a to 12d and the directions in which the columns 12a to 12d are to be grown. The above-described specific surface area and discharge frequency used in fabricating the bridged structure are one example, and the bridged structure can also be obtained by performing the fabrication under other conditions.

Further, in the bridged structure illustrated in Fig. 7, the columns 12a to 12d are grown obliquely at the angle of not greater than 90 degrees. However, the columns 12a to 12d may be grown in a direction perpendicular to the direction of the discharge axis (i.e., to the Z-axis direction), namely just laterally. Moreover, the bridged structure illustrated in Fig. 7 may be further fabricated into a net-like product by additionally stacking similar structures in the direction of the discharge axis (i.e., in the Z-axis direction), or into a three-dimensional shaped product, e.g., a cubic, by additionally forming columns in the Y-axis direction.

In the fabrication apparatus 1, as described above, when the liquid 3 is caused to fly as the single droplet 3a, the specific surface area per mass of the droplet is 0.2 m³/g or more and 0.5 m³/g or less on condition that the droplet is approximated by an ideal true sphere, and the droplets 3a are continuously discharged onto the target 5 at 1 Hz or higher and 100 Hz or lower. By discharging the droplet 3a under those conditions, the droplet 3a is dried during the flying and after being landed onto the target 5, and the colorant is agglomerated and solidified, whereby the landed droplet 3a is held in a semispherical shape on the target 5 without spreading. According to the fabrication method using the fabrication apparatus 1, therefore, the solid shaped product 12 extending in the direction of the discharge axis (i.e., in the Z-axis direction) can be fabricated by successively discharging the droplets 3a to the same position. Further, according to the fabrication method, the solid shaped product 12 can be grown to extend obliquely or substantially just laterally with respect to the direction of the discharge axis (i.e., to the Z-axis direction) by causing the droplets 3a to be landed at positions slightly shifted from each other.

Moreover, with the fabrication method described above, since the droplets 3a are landed one above another in number 1 to 100 per second, a fine solid shaped product 12 having a columnar shape can be fabricated at a rate of several µm to several tens µm per second. Also, since the solid shaped product 12 is fabricated with agglomeration of a colorant by discharging the liquid 3, which contains water and the colorant, and by drying the discharged liquid 3, the solid shaped product 12 can be dissolved in water again. Incidentally, the solid shaped product 12 can be made indissoluble in water by performing post-treatment after the fabrication or by adding a curing agent to the liquid 3. Therefore, uses of the solid shaped product 12 are not limited and versatility of the solid shaped product 12 is high. In addition, with the fabrication method described above, since any curing step with heat or light is not required after fabricating the solid shaped product 12, a fabrication time is short and an increase of the apparatus size can also be avoided. Hence the solid shaped product 12 can be fabricated by a small-sized fabrication apparatus 1. The solid shaped product 12 obtained with the fabrication is not shrunk even after drying of the solvent, and the occurrence of distortion can be avoided.

With the fabrication method described above, the droplets 3a can be appropriately solidified during the flying and after being landed and can be stacked one above another by controlling the specific surface area and the discharge frequency of the droplets 3a when they are discharged, without adding a gelling agent to the liquid 3. As a result, versatility of the liquid 3 is significantly increased.

With the fabrication method described above, a solid shaped product having a very high aspect ratio of 1 : 100 or more can be obtained.

Further, with the fabrication method described above, unlike the ordinary water-based ink jet ink, the drying and the agglomeration can be sufficiently progressed even during the flying, and there is no need of using the target 5 that absorbs the solvent. In other words, the solid shaped product 12 can be freely formed with the agglomeration of the colorant directly on a glass surface or a metal surface as well, which does not have a resin layer including such an ink receiving layer as used in the so-called ink jet paper.

Also, with the fabrication method described above, the drying of the liquid composition can be further progressed by heating the fabrication stage 6 on which the target 5 is placed. Additionally, in view of the case that a degree of growth of the solid shaped product may greatly vary depending on the thermal conductivity and the thickness of the base material, the fabrication method described above can control a drying characteristic of the droplet 3a by warming the discharged droplets to a certain temperature, thus enabling a stacking rate to be more stably controlled.

With the fabrication method described above, the obtained solid shaped product 12 has stability at a level satisfactory for commercial use, and the solid shaped product can be fabricated at a very high rate.

Still further, with the fabrication method described above, it is not needed to particularly perform water repellent treatment or the like on the base material. The reason is that, even if the water repellent treatment is performed, the diameter of the second or subsequent layer is determined depending on a wetting characteristic thereof with respect to the first or preceding layer and hence the water repellent treatment is of no significance. In the present invention, the diameter of the columnar structure depends on the specific surface area and the discharge frequency of the discharged droplets, and the environment, such as temperature and humidity, when the droplets are stacked one above another.

### EXAMPLES

Practical examples to which the present invention is applied will be described in detail below on the basis of experimental results. The composition of a liquid composition (hereinafter referred to as an "ink") used for fabrication in experiments is first described.

### (Ink A)

An ink A was prepared by metrically mixing, in ionexchange water, the yellow dye Y1189 commercialized from Ilford Imaging Switzerland GmbH at a concentration of 20% by mass, and Surfynol E1010 (made by Nissin Chemical Co., Ltd.), as a surfactant, at a concentration of 0.3% by mass.

### (Ink B)

An ink B was prepared by metrically mixing, in ionexchange water, the yellow dye Y1189 commercialized from Ilford Imaging Switzerland GmbH at a concentration of 16% by mass, trimethylol propane at 16% by mass, and Surfynol E1010 (made by Nissin Chemical Co., Ltd.), as a surfactant, at a concentration of 0.3% by mass.

### (Ink C)

An ink was prepared by metrically mixing, in ionexchange water, the yellow dye Y1189 commercialized from Ilford Imaging Switzerland GmbH at a concentration of 16% by mass, trimethylol ethane at 12% by mass, and Surfynol E1010 (made by Nissin Chemical Co., Ltd.), as a surfactant, at a concentration of 0.3% by mass.

### (Ink D)

An ink was prepared by metrically mixing, in ionexchange water, the yellow dye Y1189 commercialized from Ilford Imaging Switzerland GmbH at a concentration of 16% by mass, xylitol at 8% by mass, and Surfynol E1010 (made by Nissin Chemical Co., Ltd.), as a surfactant, at a concentration of 0.3% by mass.

### (Ink E)

An ink was prepared by metrically mixing, in ionexchange water, the yellow dye Y1189 commercialized from Ilford Imaging Switzerland GmbH at a concentration of 16% by mass, D-mannitol at 4% by mass, and Surfynol E1010 (made by Nissin Chemical Co., Ltd.), as a surfactant, at a concentration of 0.3% by mass.

By using the inks A to E thus prepared, shaped products were fabricated in the following EXAMPLES 1 to 9 and COMPARATIVE EXAMPLES 1 to 3. Here, a plurality of ink jet heads (liquid discharge heads) having different dimensions, i.e., the thickness of a nozzle sheet from 10 to 20 µm, the diameter of a nozzle from 9 to 30 µm, the heater size of 20 µm × 20 µm, and the height of a liquid pressurization chamber from 8 to 12 µm, were used in EXAMPLES and COMPARATIVE EXAMPLES. While the driving frequency of each ink jet head could be increased to 10 KHz or higher, the solid fabrication was carried out at 1 Hz or higher and 100 Hz or lower. In the solid fabrication, a driving pulse was 1.3 µs and a driving voltage was 9.8 V.

### (EXAMPLE 1)

The ink A was used as the liquid composition, a slide glass was employed as the base material (target), and the distance between the base material and the ink jet head (liquid discharge head) was set to 100 µm. Thereafter, droplets each having a specific surface area of 0.5 m³/g were landed to the same position on the base material at 10 Hz. On those conditions, an experiment was carried out while a space between the ink jet head and the base material was controlled to 25°C ± 5°C and to relative humidity of 50% ± 10%.

In the experiment described above, corresponding to growth of a columnar shaped product at a rate of 5 µm per second, the ink jet head was moved away from the base material in steps of 5 µm per second such that the distance from the growth point to the nozzle was held constant and a stable shaped product was obtained.

A cylindrically columnar shaped product having a diameter of 14 µm and a height of 300 µm was obtained, as illustrated in Fig. 5(B), by stacking a number 600 of droplets for 60 seconds one above another.

### (EXAMPLE 2)

The ink B was used as the liquid composition, a slide glass was employed as the base material, and the distance between the base material and the ink jet head was set to 400 µm. Thereafter, droplets each having a specific surface area of 0.2 m³/g were landed to the same position on the base material at 1 Hz. On those conditions, an experiment was carried out while a space between the ink jet head and the base material was controlled to 25°C ± 5°C and to relative humidity of 50% ± 10%.

Corresponding to growth of a columnar shaped product at a rate of 0.2 µm per second, the ink jet head was moved away from the base material in steps of 0.2 µm per second such that the distance from the growth point to the nozzle was held constant and a stable shaped product was obtained.

A cylindrically columnar shaped product having a diameter of 40 µm and a height of about 250 µm was obtained, as illustrated in Fig. 5(A), by stacking a number 1200 of droplets for 1200 seconds one above another.

### (EXAMPLE 3)

The ink B was used as the liquid composition, a slide glass was employed as the base material, and the distance between the base material and the ink jet head was set to 400 µm. Thereafter, droplets each having a specific surface area of 0.3 m³/g were landed to the same position on the base material at 10 Hz. On those conditions, an experiment was carried out while a space between the ink jet head and the base material was controlled to 25°C ± 5°C and to relative humidity of 50% ± 10%.

Corresponding to growth of a columnar shaped product at a rate of 20 µm per second, the ink jet head was moved away from the base material in steps of 20 µm per second such that the distance from the growth point to the nozzle was held constant and a stable shaped product was obtained.

A cylindrically columnar shaped product having a diameter of 24 µm and a height of about 500 µm was obtained, as illustrated in Fig. 3, by stacking a number 600 of droplets for 60 seconds one above another. A stacking process was progressed as per illustrated in Fig. 4.

### (EXAMPLE 4)

The ink A was used as the liquid composition, a slide glass was employed as the base material, and the distance between the base material and the ink jet head was set to 100 µm. Thereafter, a liquid temperature in the ink jet head was warmed up to 60°C, and droplets each having a specific surface area of 0.5 m³/g were landed to the same position on the base material at 100 Hz. On those conditions, an experiment was carried out while a space between the ink jet head and the base material was controlled to 25°C ± 5°C and to relative humidity of 50% ± 10%.

Corresponding to growth of a columnar shaped product at a rate of 50 µm per second, the ink jet head was moved away from the base material in steps of 50 µm per second such that the distance from the growth point to the nozzle was held constant and a stable shaped product was obtained.

A cylindrically columnar shaped product having a diameter of 15 µm and a height of about 200 µm was obtained by stacking a number 500 of droplets for 0.5 second one above another.

### (EXAMPLE 5)

The ink C was used as the liquid composition, a slide glass was employed as the base material, and the distance between the base material and the ink jet head was set to 400 µm. Thereafter, droplets each having a specific surface area of 0.3 m³/g were landed to the same position on the base material at 10 Hz. On those conditions, an experiment was carried out while a space between the ink jet head and the base material was controlled to 25°C ± 5°C and to relative humidity of 50% ± 10%.

Corresponding to growth of a columnar shaped product at a rate of 20 µm per second, the ink jet head was moved away from the base material in steps of 20 µm per second such that the distance from the growth point to the nozzle was held constant and a stable shaped product was obtained.

A cylindrically columnar shaped product having a diameter of 25 µm and a height of about 450 µm was obtained by stacking a number 600 of droplets for 60 seconds one above another.

### (EXAMPLE 6)

The ink D was used as the liquid composition, a slide glass was employed as the base material, and the distance between the base material and the ink jet head was set to 400 µm. Thereafter, droplets each having a specific surface area of 0.3 m³/g were landed to the same position on the base material at 10 Hz. On those conditions, an experiment was carried out while a space between the ink jet head and the base material was controlled to 25°C ± 5°C and to relative humidity of 50% ± 10%.

Corresponding to growth of a columnar shaped product at a rate of 20 µm per second, the ink jet head was moved away from the base material in steps of 20 µm per second such that the distance from the growth point to the nozzle was held constant and a stable shaped product was obtained.

A cylindrically columnar shaped product having a diameter of 24 µm and a height of about 420 µm was obtained by stacking a number 600 of droplets for 60 seconds one above another.

### (EXAMPLE 7)

The ink E was used as the liquid composition, a slide glass was employed as the base material, and the distance between the base material and the ink jet head was set to 400 µm. Thereafter, droplets each having a specific surface area of 0.3 m³/g were landed to the same position on the base material at 10 Hz. On those conditions, an experiment was carried out while a space between the ink jet head and the base material was controlled to 25°C ± 5°C and to relative humidity of 50% ± 10%.

Corresponding to growth of a columnar shaped product at a rate of 20 µm per second, the ink jet head was moved away from the base material in steps of 20 µm per second such that the distance from the growth point to the nozzle was held constant and a stable shaped product was obtained.

A cylindrically columnar shaped product having a diameter of 24 µm and a height of about 400 µm was obtained by stacking a number 600 of droplets for 60 seconds one above another.

### (EXAMPLE 8)

The ink B was used as the liquid composition, a slide glass was employed as the base material, and the distance between the base material and the ink jet head was set to 400 µm. Thereafter, droplets each having a specific surface area of 0.3 m³/g were landed to the same position on the base material at 10 Hz. On those conditions, an experiment was carried out while a space between the ink jet head and the base material was controlled to 25°C ± 5°C and to relative humidity of 50% ± 10%.

Corresponding to growth of a columnar shaped product, the ink jet head was moved away from the base material such that the distance from the growth point to the nozzle was held constant and a stable shaped product was obtained.

A spring-like structure could be obtained by moving the fabrication stage, on which the base material was placed, to turn along a circle with a radius of 40 µm once in 10 seconds.

### (EXAMPLE 9)

The ink B was used as the liquid composition, a slide glass was employed as the base material, and the distance between the base material and the ink jet head was set to 400 µm. Thereafter, droplets each having a specific surface area of 0.3 m³/g were landed to the same position on the base material at 10 Hz. On those conditions, an experiment was carried out while a space between the ink jet head and the base material was controlled to 25°C ± 5°C and to relative humidity of 50% ± 10%.

Corresponding to growth of a columnar shaped product, the ink jet head was moved away from the base material such that the distance from the growth point to the nozzle was held constant and a stable shaped product was obtained.

Then, a shaped structure, such as illustrated in Fig. 7, was obtained by moving the fabrication stage as follows.

After fabricating a columnar shaped product having a height of 100 µm, the stage including the base material placed thereon was moved in the X-axis direction at a pitch of 100 µm. By similarly repeating the operation of fabricating a columnar shaped product of 100 µm and moving the fabrication stage, a group of four columns each having a diameter of 24 µm and a height of 100 µm was fabricated.

Subsequently, one of the columns was grown to extend at an angle of 45° by moving the base material in the X-axis direction in steps of 20 µm per droplet after each droplet was landed to the top end of the one column. Further, another column adjacent to the one column was grown to extend in a direction opposed to the extending direction of the one column until joining to the one column, whereby an arch structure was obtained. A bridged structure, such as illustrated in Fig. 7, was obtained by repeating the above-described operations.

### (COMPARATIVE EXAMPLE 1)

The ink A was used as the liquid composition, a slide glass was employed as the base material, and the distance between the base material and the ink jet head was set to 100 µm. Thereafter, droplets each having a specific surface area of 0.15 m³/g were landed to the same position on the base material at 10 Hz. On those conditions, an experiment was carried out while a space between the ink jet head and the base material was controlled to 25°C ± 5°C and to relative humidity of 50% ± 100.

In spite of discharging a number 600 of droplets for 60 seconds, any columnar shaped product was not obtained and a semispherical ink liquid remained on the base material. The ink liquid became a circular dot having a thickness of 1 µm or less through sufficient drying after several tens minutes.

### (COMPARATIVE EXAMPLE 2)

The ink A was used as the liquid composition, a slide glass was employed as the base material, and the distance between the base material and the ink jet head was set to 100 µm. Thereafter, droplets each having a specific surface area of 0.5 m³/g were landed to the same position on the base material at 300 Hz. On those conditions, an experiment was carried out while a space between the ink jet head and the base material was controlled to 25°C ± 5°C and to relative humidity of 50% ± 10%.

In spite of discharging a number 600 of droplets for 2 seconds, any columnar shaped product was not obtained and a semispherical ink liquid remained on the base material.

The ink liquid became a circular dot having a thickness of 1 µm or less through sufficient drying after several tens minutes.

### (COMPARATIVE EXAMPLE 3)

The ink A was used as the liquid composition, a slide glass was employed as the base material, and the distance between the base material and the ink jet head was set to 100 µm. Thereafter, the ink A was fed to an ink jet head capable of discharging droplets, each having a specific surface area of 0.5 m³/g, with a discharge pulse once in two seconds (i.e., at 0.5 Hz). On those conditions, an experiment was carried out while a space between the ink jet head and the base material was controlled to 25°C ± 5°C and to relative humidity of 50% ± 10%.

Under the conditions described above, the discharge direction was not stabilized, or no droplets were discharged, whereby any shaped product was not fabricated.

The experimental results of EXAMPLES and COMPARATIVE EXAMPLES are listed in Table 1.

**(Table 1)**

| | Ink | Distance | Frequency | Specific Surface Area (Volume) | Warming | Shaped | Product |
|---|---|---|---|---|---|---|---|
| | | | | | | (diameter) | (height) |
| EXAMPLE 1 | A | 100 µm | 10 Hz | 0.5 m³/g (0.9 pl) | none | φ14 µm | 300 µm |
| EXAMPLE 2 | B | 400 µm | 1 Hz | 0.2 m³/g (14.1 pl) | none | φ40 µm | 250 µm |
| EXAMPLE 3 | B | 400 µm | 10 Hz | 0.3 m³/g (4.2 pl) | none | φ24 µm | 500 µm |
| EXAMPLE 4 | A | 100 µm | 100 Hz | 0.5 m³/g (0.9 pl) | 60°C | φ15 µm | 200 µm |
| EXAMPLE 5 | C | 400 µm | 10 Hz | 0.3 m³/g (4.2 pl) | none | φ25 µm | 450 µm |
| EXAMPLE 6 | D | 400 µm | 10 Hz | 0.3 m³/g (4.2 pl) | none | φ24 µm | 420 µm |
| EXAMPLE 7 | E | 400 µm | 10 Hz | 0.3 m³/g (4.2 pl) | none | φ24 µm | 400 µm |
| EXAMPLE 8 | B | 400 µm | 10 Hz | 0.3 m³/g (4.2 pl) | none | spring of φ24 µm | |
| EXAMPLE 9 | B | 400 µm | 10 Hz | 0.3 m³/g (4.2 pl) | none | grid of φ24 µm | |
| COMPARATIVE EXAMPLE 1 | A | 100 µm | 10 Hz | 0.15 m³/g (33.5 pl) | none | remain as droplets | |
| COMPARATIVE EXAMPLE 2 | A | 100 µm | 300 Hz | 0.5 m³/g (0.9 pl) | none | remain as droplets | |
| COMPARATIVE EXAMPLE 3 | A | 100 µm | 0.5 Hz | 0.5 m³/g (0.9 pl) | none | no discharge | |

As seen from Table 1, in EXAMPLE 1 to EXAMPLE 9, the columnar shaped products could be fabricated because the fabrication was performed by discharging the droplets, each having the specific surface area in the range of 0.2 m³/g or more and 0.5 m³/g or less, onto the base material at frequency in the range of 1 Hz or higher and 100 Hz or lower. On the other hand, the shaped products could not be fabricated in COMPARATIVE EXAMPLE 1 to COMPARATIVE EXAMPLE 3 not satisfying those requirements.

Additionally, it is not needed to particularly perform water repellent treatment or the like on the base material. The reason is that, even if the water repellent treatment is performed, the diameter of the second or subsequent layer (droplet) is determined depending on a wetting characteristic thereof with respect to the first or preceding layer (landed droplet) and hence the water repellent treatment is of no significance. In the present invention, the diameter of the columnar structure depends on the specific surface area and the discharge frequency of the discharged droplets, and the environment, such as temperature and humidity, when the droplets are stacked one above another.

### Reference Signs List

1 fabrication apparatus, 2 support table, 3 liquid, 4 liquid discharge head, 5 target, 6 fabrication stage, 7 Z-axis moving unit, 8 X-axis moving unit, 9 Y-axis moving unit, 12 solid shaped product, 12a columns, 22a heater, 22b warming heater

## Claims

1. A solid shaped-product fabrication method of discharging, to a target, a droplet from a nozzle of a liquid discharge unit for discharging a liquid, and fabricating a solid shaped product,
wherein the liquid contains water and a colorant that is dissolved or dispersed in the water,
the droplet is continuously discharged to the target at 1 Hz or higher and 100 Hz or lower, the droplet having a specific surface area per mass of 0.2 m³/g or more and 0.5 m³/g or less on condition that the droplet is approximated by an ideal true sphere when the liquid is caused to fly as a single droplet, and
the droplets are stacked on the target one above another, thereby fabricating the solid shaped product extending in the same direction as that of a discharge axis of the droplet.

2. The solid shaped-product fabrication method according to Claim 1, wherein the solid shaped product is fabricated to extend obliquely at an angle of not greater than 90 degrees or just laterally with respect to the direction of the discharge axis of the droplet by stacking the droplets such that a landed position of the droplet is shifted by a distance not greater than a diameter of the droplet previously landed onto the target.

3. The solid shaped-product fabrication method according to Claim 1 or 2, wherein a moisturizing agent is added to the liquid in an amount not exceeding a concentration of the colorant.

4. The fabrication method according to any one of Claims 1 to 3, wherein the liquid filled in the liquid discharge unit is humidified.

5. A fabrication apparatus comprising:
a liquid discharge unit having a nozzle to discharge a droplet of a liquid,
a fabrication stage on which a target is placed, the droplet being landed onto the target, and
a Z-axis moving unit for moving the liquid discharge unit and/or the fabrication stage in a Z-axis direction, which is defined as the same direction as that of a discharge axis of the droplet,
wherein the liquid discharge unit continuously discharges the droplet to the target at 1 Hz or higher and 100 Hz or lower, the droplet having a specific surface area per mass of 0.2 m³/g or more and 0.5 m³/g or less on condition that the droplet is approximated by an ideal true sphere when the liquid containing water and a colorant dissolved or dispersed in the water is caused to fly as a single droplet, and the Z-axis moving unit moves the liquid discharge unit and/or the fabrication stage in the Z-axis direction while the droplets are stacked one above another, thereby fabricating a solid shaped product extending in the Z-axis direction.

6. The fabrication apparatus according to Claim 5, further comprising an X-axis moving unit and a Y-axis moving unit for moving the liquid discharge unit and/or the fabrication stage in an X-axis direction and a Y-axis direction, respectively, in a plane perpendicular to the Z-axis,
wherein the X-axis moving unit and/or the Y-axis moving unit moves the liquid discharge unit and/or the fabrication stage in the plane substantially perpendicular to the Z-axis direction in a manner of stacking the droplets such that a landed position of the droplet is shifted by a distance not greater than a diameter of the droplet previously landed onto the target, thereby fabricating the solid shaped product which extends obliquely at an angle of not greater than 90 degrees or just laterally with respect to the Z-axis direction.

7. The fabrication apparatus according to Claim 5 or 6, further comprising a measuring unit for measuring temperature and humidity in a space between the liquid discharge unit and the fabrication stage, and a control unit for controlling the temperature and the humidity.
